(19) Europäisches Patentamt
European Patent Office
Office européen des brevets

(11) **EP 3 268 602 B1**

(12) **EUROPEAN PATENT SPECIFICATION**

(45) Date of publication and mention
of the grant of the patent:
**08.05.2019 Bulletin 2019/19**

(21) Application number: **16722404.7**

(22) Date of filing: **03.03.2016**

(51) Int Cl.:
**F03B 17/06** *(2006.01)*  **B63H 1/04** *(2006.01)*

(86) International application number:
**PCT/NL2016/050146**

(87) International publication number:
**WO 2016/144160 (15.09.2016 Gazette 2016/37)**

(54) **IMPROVED APPARATUS FOR EXCHANGING KINETIC ENERGY BETWEEN A FLUID AND A STRUCTURE MOVEABLE RELATIVE TO THE FLUID**

VERBESSERTE VORRICHTUNG ZUM AUSTAUSCH VON KINETISCHER ENERGIE ZWISCHEN EINER FLÜSSIGKEIT UND EINER RELATIV ZUR FLÜSSIGKEIT BEWEGLICHEN STRUKTUR

APPAREIL AMÉLIORÉ D'ÉCHANGE D'ÉNERGIE CINÉTIQUE ENTRE UN FLUIDE ET UNE STRUCTURE MOBILE PAR RAPPORT AU FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2015 NL 2014441**

(43) Date of publication of application:
**17.01.2018 Bulletin 2018/03**

(73) Proprietor: **HTP Technologies B.V.**
**0000 Curacao (CW)**

(72) Inventor: **VAN BRIEMEN, Johannes Willem**
**3742 AP Baarn (NL)**

(74) Representative: **Patentwerk B.V.**
**P.O. Box 1514**
**5200 BN 's-Hertogenbosch (NL)**

(56) References cited:
**WO-A1-2007/009155    FR-A1- 2 924 181**
**NL-A- 1 039 946    US-A- 212 014**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to an apparatus for exchanging kinetic energy between a fluid and a structure moveable relative to the fluid and connected to the apparatus, the apparatus comprising a channel enclosed by a channel wall connected with the structure, the channel wall being adapted to guide the fluid, at least four substantially identical blades extending within the channel, being moveable within the channel and being connected to an energy converter coupled with the structure, the blades each comprising two substantially identical blade parts, separated by a hinge, extending in a radial plane in each position of the blades, wherein the blades are adapted to perform a recurrent movement, in the flow direction with the main plane of the blades extend substantially perpendicular to the flow direction, and against the flow direction with the main plane of the blades extend substantially parallel to the flow direction.

Such an apparatus is disclosed in the Dutch patent application NL-A-1 039 946.

The technical implementation of this prior art apparatus is rather complicated as it comprises a substantial number of parts and joints, leading to an expensive construction which needs substantial maintenance.

The aim of the present invention is to provide such an apparatus, wherein the disadvantages of the prior art are alleviated.

This aim is reached in by an apparatus of the kind referred to above, wherein between each pair of adjacent blades a wall joint is connected to the channel wall, a hinge joint being located in the centre of each hinge, a rod extends between each wall joint and the two adjacent hinge joints and the two blade halves adjacent to a wall joint extend orthogonal in each position of the blades.

It may be advantageous to express the movement of the planes in linear algebra. In linear algebra a flat plane in space can be described by one supporting vector SV(x,y,z) and two direction vectors DV1(x,y,z) and DV2(x,y,z) wherein x,y and z represent the coordinates. By varying the length of the direction vectors with two parameters (usually $\lambda$ and $\mu$) all points on the plane can be found. This is represented in the following formula:

$$P(x,y,z)=SV(x,y,z) + \lambda.\ DV1(x,y,z) + \mu\ DV2(x,y,z)$$

The blades in the system are described by four or a larger even number of planes with mathematically determined direction vectors and supporting vectors, wherein the planes have mutually constrained relationships.

In case of six blades and twelve blade halves all adjacent planes (planes ab and cd) follow the relationship that the supporting vectors (SVab and SVcd) describe a circular orbit with an accelerated angle rotation, similar to an universal or cardan joint in a fixed angle of 30°. Their two direction vectors (DV1ab, DV2ab and DV1cd, DV2cd) are mutually related by the fact that the angle of DV1ab and DVlcd equals 90° and the angle of DV2ab and DV2cd equals 60° during the complete rotation of 360°.

This new configuration maintains the advantages of the prior art apparatus as described in NL-A-1 039 946, but in a mechanically simpler configuration, with less parts and joints, making the construction less vulnerable for damage and requiring less maintenance.

Preferably the channel has a symmetrical cross section at the location of the blades, the blades have been arranged symmetrically in the channel and that the wall joints are evenly distributed over the circumference of the cross section of the channel. This enhancement of symmetry makes the advantages related to symmetry, such as the compensation of pressures and flows perpendicular to the main direction of flow.

To obtain an even further simplification of the construction, another preferred embodiment provides the feature that the blades halves each comprise a frame with linear bars extending to both sides of the hinges parallel to the axes of the hinges and a semi-circular guide rail connecting the distal ends of the bars, wherein a sleeve is located around each semi-circular guide rail and each sleeve is connected with a rod.

The above embodiment defines only the frame which forms the basis for the blades. A first embodiment of the blade halves is characterized in that the blade halves comprise blade sheets located at one side of the blade frames.

Additionally it is possible that the blade halves comprise blade sheets extending at both sides of the blade frames, thus enclosing the frames.

Just as in the prior art apparatus, an optimal configuration is obtained when the apparatus comprises six blades and the two rods extending from the same joint, extend under an angle of 120°. In this embodiment the blades extend over nearly the full cross-section of the channel in the position in which they (alternately) extend perpendicular to the main flow direction.

A further simplification takes place when the wall joint is a ball joint and that the two rods extending from the ball joint, are solidly connected. However this embodiment requires an alternative way for transferring the mechanical power between the apparatus according to the invention and the energy converter, as the ball joint serves only for guiding purposes.

In an alternative to the preceding embodiment, the wall joint comprises a shaft extending in the tangential direction, that the two rods are connected to the shaft by a universal joint and that the shaft is connected with the energy converter. This embodiment comprises more parts, but it is adapted to transfer mechanical power between the apparatus according to the invention and the energy converter.

An embodiment especially adapted for combination with the embodiment with a ball joint as a wall joint provides the feature that the apparatus comprises a drive shaft for each blade, the drive shaft being coupled to the energy converter and the drive shaft extending in tangential direction between the radial middle plane of the blades and that the drive shaft is connected with a crank connected to the centre of the hinge.

As stated before, the apparatus according to the invention can be used to the conversion of kinetic energy from a flowing fluid to the kinetic energy of a moving structure, but also for the conversion of kinetic energy from a moving structure to the kinetic energy of a fluid. This implies that energy conversion in two directions is possible. Often a further conversion of energy is required, such as into electrical energy or from electrical energy. Hence a preferred embodiment proposes to couple the connection elements each to a first part of an energy converter and to connect the blade parts each to the second part of the energy converter. The energy converter may be an electrical machine, which can function as a generator or as a motor allowing energy conversion in both directions. It is however also possible to This embodiment provides an integration of the electric machine into the apparatus itself, avoiding the use of electrical machines located elsewhere, and hence providing a compact structure. As stated before, an attractive application of the invention resides in the conversion of kinetic energy of flowing water to kinetic energy of a rotating shaft, which can be used for water turbines.

A similar application of the invention resides in the propulsion of ships. Hence an embodiment proposes that the apparatus is dimensioned for converting kinetic energy of a rotatable shaft into kinetic energy of vessel connected to the apparatus and that the rotatable shaft of the apparatus is connected to a combustion engine or to an electric motor.

The two applications mentioned above relate to the exchange of kinetic energy to and from water. Another application resides in the exchange of kinetic energy to and from air. A first application is in ventilators, but another, presumably more important application resides in wind turbines. Consequently a preferred embodiment provides an apparatus of the kind referred to above which is dimensioned for converting kinetic energy of wind into kinetic energy of a rotatable shaft.

Another preferred embodiment provides the feature that the rotatable shaft is coupled to an electric generator.

A major advantage resides in strong reduction of currents in the direction deviating from the main direction of flow. This implies that adjacent flows generated by the apparatus according to the invention will interfere less than before. This will not only count for situations wherein the apparatus according to the invention is used for generating flows, but also in situations wherein the kinetic energy of flows is converted into kinetic energy of a rotating shaft, wherein the lack of flows deviating from the main direction of flow will appear from the flows leaving the apparatus. This effect allows to combine a number of apparatuses in their immediate vicinity. A preferred embodiment of hence provides the feature that the rotatable shafts of the apparatuses extend mutually parallel, and that the distance between the channel walls of adjacent apparatuses is smaller than the width of the channel walls.

The apparatuses do not necessarily have to be arranged with their centres in the same plane, but due to constructional reasons it can be attractive when the blades of the apparatuses in their position perpendicular to the flow direction, extend substantially in the same plane. This allows to construct 'energy walls' with large numbers of apparatuses being arranged in the same structure. Such walls may be constructed in the sea, preferably in locations wherein tides provide for alternating flows, but also in locations where winds are prevailing to allow large amounts of energy to be generated by a single structure.

Of course it is possible to connect each of the apparatuses to a separate energy converter, but it is usually attractive to connect al apparatuses to the same energy converter. However when the number of apparatuses is large, it may be advantageous to divide the number of apparatuses into a number of groups wherein the apparatuses belonging to a group, are connected to the same energy converter.

Subsequently the present invention will be elucidated with the help of the following drawings wherein depict:

Figure 1: a cross sectional view of an apparatus according to the invention;

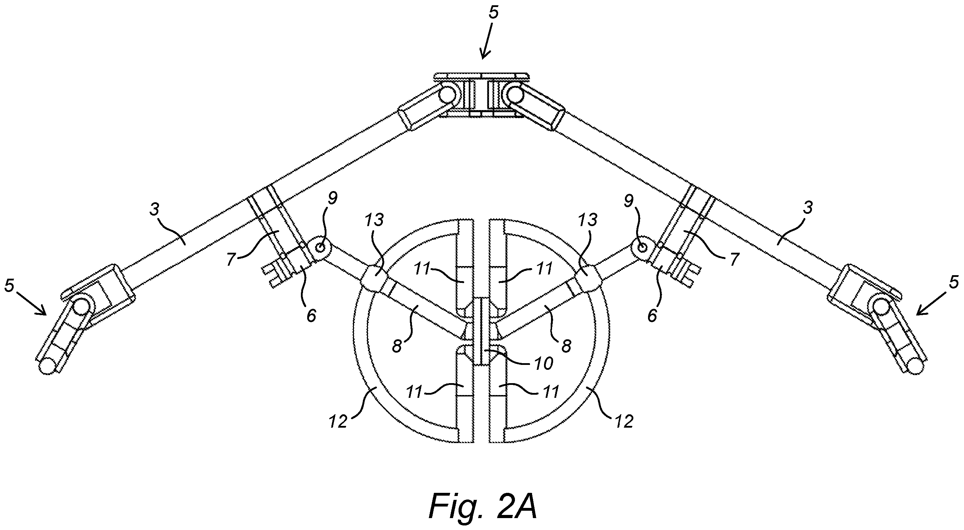

Figure 2A: a cross sectional view of a detail of the apparatus depicted in figure 1;

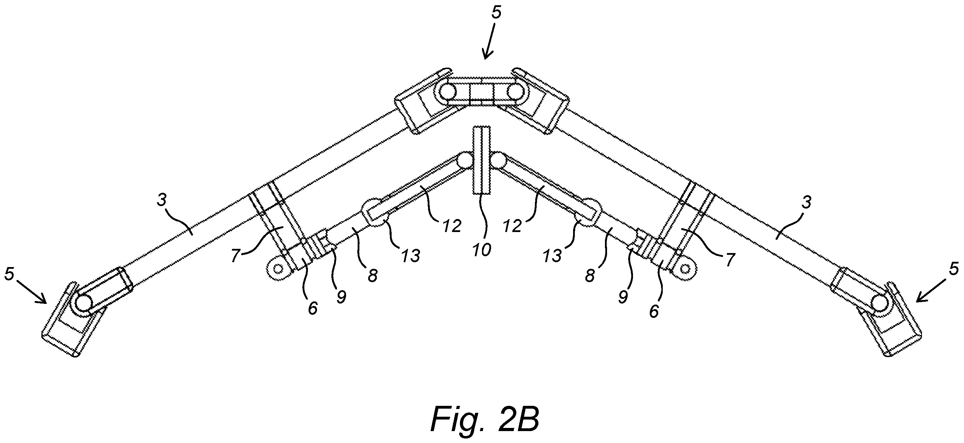

Figure 2B: a cross sectional view of a detail of the apparatus depicted in figure 1, wherein the blades have a different position;
Figure 3: a diagram showing the movement of points of the blades of the apparatus depicted in figure 1;
Figure 4: a perspective view of an alternative embodiment; and
Figure 5: a cross of the sectional view of the embodiment depicted in figure 4.

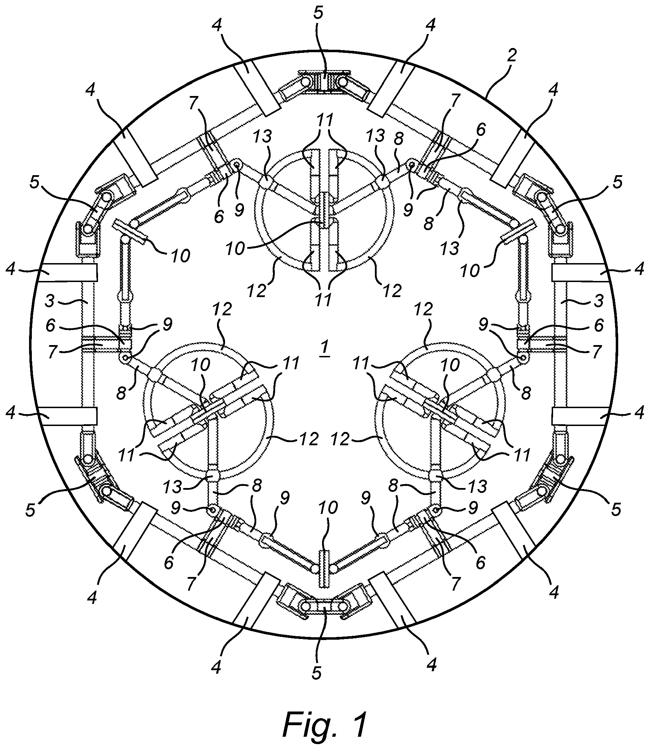

The apparatus according to the invention is located in a channel, preferably a cylindrical channel 1, as shown in figure 1. The cylindrical channel 1 is enclosed in a channel wall 2. All figure show a hexagonal configuration, which seems to be the optimal configuration, although other configurations, such as octagonal are not excluded. The hexagonal configuration of the apparatus comprises six drive shafts 3, each extending in a tangential direction in a plane perpendicular to the axial direction of the channel 1. All drive shafts are journalled in bearings 4 connected to the channel wall 2. The drive shafts are mutually connected by joints, preferably homokinetic joints 5. The apparatus further comprises connecting shafts 6 extending parallel to the drive shafts 3, and drivingly connected to the drive shafts by sets of gears 7. The connecting shafts 6 are significantly shorter than the drive shafts 3. Although not depicted in the drawings, the drive shafts 3 are coupled with an energy converter, located at the outside of the channel 1.

At each end of the connecting shafts 6, rods 8 are connected by universal joints 9. The distal ends of each pair of rods 8 are mutually connected by hinges 10. The hinges 10 comprise two leaves each, which can mutually rotate relative to a first axis extending with a radial component. In so far they are 'normal' hinges. The hinges further allow mutual movement of the rods over a second axis perpendicular to the first axis. Bars 11 extend from both ends of the hinges in the direction of the first axis of the hinges 10. The ends of the bars extending from the same hinge 10 are connected to a semi-circular guide rail 12. The rods are provided with sleeves 13 which surround the rods 8. The combination of a hinge half of a hinge 10, the two bars 11 connected thereto and the semi-circular guide rail 12 form a frame, of which the position is determined by the rods 8. The complete apparatus comprises twelve of these frames. Each of the frames is covered by a single blade extending at one side of the frame, or by two blades extending at either side of the frames. For clarity reasons the blades are omitted in the drawings.

It is noted that none of the figures depicts the actual blades themselves, as for reasons of clarity, the blades are omitted from the figures. Nevertheless it will be clear that the blades extend over the area covered by the hinges 10, the bars 11 and the semi-circular guides 12. The blades may extend at one side of the frame formed by the hinges 10, the bars 11 and the semi-circular guides 12 only, but that they may as well extend at both sides of these frames. Herein the latter configuration seems the most advantageous as the action of the blades will be symmetrical.

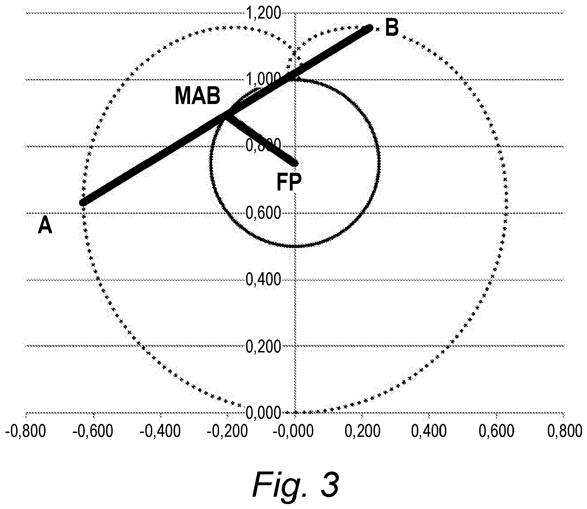

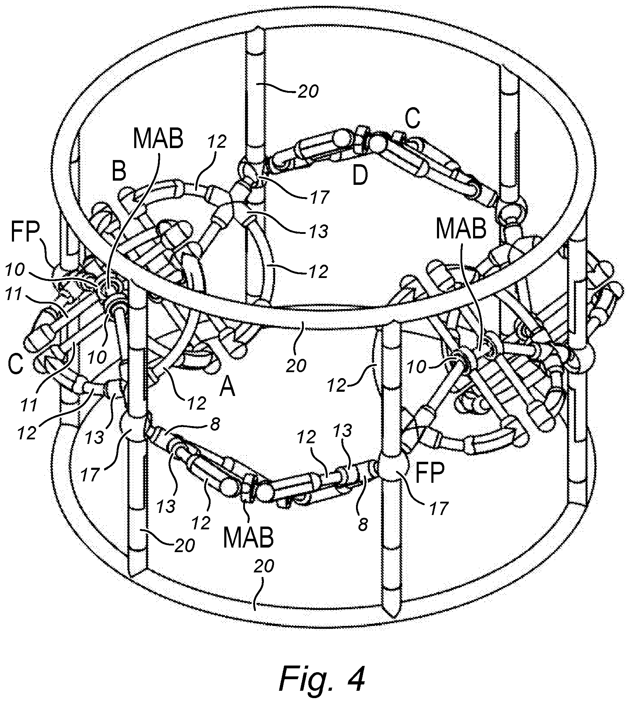

Figure 3 shows the trajectories of several points of the centre line of a blade in a radial plane. The centre of the blade is formed by the axis of the hinges 10, extending between the distal ends of the bars 11. The ends are marked by A and B and FP denotes the centre point of this central line AB, that is the point where the rods 8 meet the hinge 10. The centre MAB performs a circular movement around a centre FP, and the ends A and B perform a movement having a cardioid shape as shown in figure 4 during movement of the blades. Herein both ends move over the same path.

The apparatus thus described may perform a movement, as caused by the flow of a fluid through the channel, which acts a force on the blades. In such a case the apparatus is used for generating electricity from the flow of water or air. It is also possible that the apparatus is used for driving a vessel, in that the apparatus forms part of a vessel, the energy converter, also incorporated in the vessel, drives the blades and the blades act forces on the fluid, thus propelling the vessel.

The blades perform a complicated movement, which will be briefly discussed with the help of figure 4. It is noted that figure 4 shows a different embodiment but the movements and geometry of both embodiments are the same. There are some aspects which are better understood with the help of figure 4, as this figure shows the relation between the position of the different blades. All six blades 15 perform a sync movement, wherein three blades are in phase and the three other blades located between the other three are shifted in phase over 180°. In other words, adjacent blades are in counter phase. This can also be expressed by the fact that the axes of the hinges of adjacent blades extend orthogonal, which can be seen from figure 3. Another feature of the present invention is that the angle between rods 8 of adjacent blades is 120°. In the embodiment discussed above this not a very important feature, but it is in the embodiment to be discussed subsequently. Further the two rods 8 of the same blade 15 also extend under an angle of 120°. This implies that these rods can be mutually connected in the embodiment discussed above. Of course, this would imply that each rods must allow mutual rotation around its longitudinal axis between its mutually connected end and its end connected to the connecting shafts 6. Further this would require an elaborate construction of the hinges 10, despite the fact that the rods in a blade form one piece.

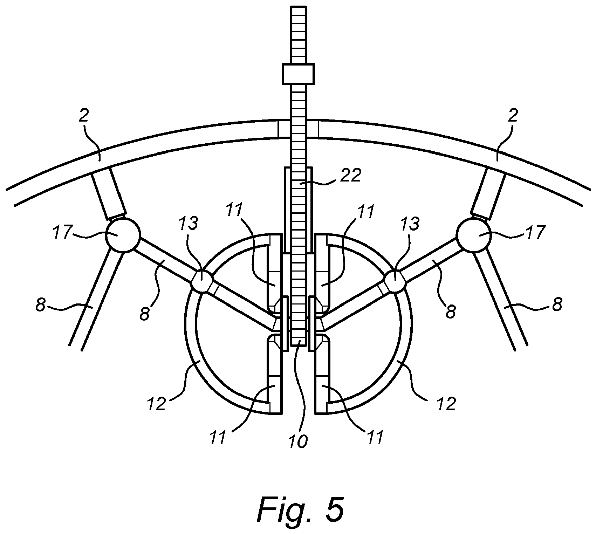

The fact that the two rods connected with adjacent blades extend under an angle of 120°, offers the possibility to form a rigid connection between these two rods. However the guiding of the connection point or joint between these rods is essential for the action of the apparatus according to the invention. Hence in an alternative embodiment, depicted in figures 4 and 5, the connecting shafts 6 have been removed, together with their homokinetic joints 7 and been replaced by a guide 16 for a ball joint 17. The rods 8 are both rigidly connected to the ball of the ball joint 17 so that the two rods 8 and the ball of the ball joint 17 form a single part. Just as in the embodiment described before, the rods 8 must be able to rotate around their own axes at the connection with the hinges on the blades to allow proper functioning of the apparatus. This is best visible in figure 4, showing the structure of the second embodiment in perspective view. To enhance clarity the channel wall of the channel has been removed and been replaced by a grid 20, wherein the ball joints 17 are integrated. It will be clear that a channel wall will be present nevertheless.

As at the location of the ball joint 17 there is no possibility to transfer mechanical energy between the blades and the external energy converter. Hence other means must be provided to perform this function. The embodiment depicted in figure 4 comprises such means in the form of a wheel 21 on a shaft 22 extending in the tangential direction and located at the point FP depicted in figure 3. Said shaft 22 is connected with the external energy converter, possibly, as depicted in figure 5, via gear teeth located on the wheel 21, which teeth are in engagement with the teeth on a gear 23 on a shaft which is coupled to the energy converter. Therefore the wheel 21 is eccentrically connected with the hinge 11 and it performs the function of a crank for transmitting the rotation of the centre of the blades to the shaft 22 and further to the external energy converter.

It will be clear that numerous modifications can be made to the shown embodiments of which features may be mutually combined and that the scope is determined by the claims.

**Claims**

1. Apparatus for exchanging kinetic energy between a fluid and a structure moveable relative to the fluid and connected to the apparatus, the apparatus comprising:

    - a channel (1) enclosed by a channel wall connected with the structure, the channel wall being adapted to guide the fluid;
    - at least four substantially identical blades extending within the channel, being moveable within the channel and being connected to an energy converter coupled with the structure, the blades each comprising two substantially identical blade parts, separated by a hinge (10), extending in a radial plane in each position of the blades;

    wherein:

    - - the blades are adapted to perform a recurrent movement,
    - - in the flow direction with the main plane of the blades extend substantially perpendicular to the flow direction, and
    - - against the flow direction with the main plane of the blades extend substantially parallel to the flow direction,

    **characterized in that**

    - between each pair of adjacent blades a wall joint is connected to the channel wall;
    - a second orthogonal hinge joint being located in the centre of each hinge;
    - a rod (8) extends between each wall joint and the two adjacent hinge joints; and
    - the two blade halves adjacent to a wall joint extend orthogonal in each position of the blades.

2. Apparatus as claimed in claim 1, **characterized in that** the channel has a symmetrical cross section at the location of the blades, the blades have been arranged symmetrically in the channel and that the wall joints are evenly distributed over the circumference of the cross section of the channel.

3. Apparatus as claimed in claim 2, **characterized in that** the blades halves each comprise a frame with a straight bars extending to both sides of the hinges parallel to the axes of the hinges and a semi-circular guide rail connecting the distal ends of the bars, wherein a sleeve is located around each semi-circular guide rail and that each sleeve is connected with a rod.

4. Apparatus as claimed in claim 1, 2 or 3, **characterized in that** the blade halves comprise blade sheets located at one side of the blade frames.

5. Apparatus as claimed in claim 4, **characterized in that** the blade halves comprise blade sheets extending at both sides of the blade frames.

6. Apparatus as claimed in any of the preceding claims, **characterized in that** the apparatus comprises six blades and that the two rods extending from the same joint, extend under an angle of 120°.

7. Apparatus as claimed in claim 6, **characterized in that** the wall joint is a ball joint and that the two rods extending from the ball joint, are solidly connected.

8. Apparatus as claimed in claim 6, **characterized in that** the wall joint comprises a shaft extending in the tangential direction, that the two rods are connected to the shaft by a universal joint and that the shaft is connected with the energy converter.

9. Apparatus as claimed in claim 6, **characterized in that** the apparatus comprises a drive shaft for each blade, the drive shaft being coupled to the energy converter and the drive shaft extending in tangential direction between the radial middle plane of the blades and that the drive shaft is connected with a crank connected to the centre of the hinge.

10. Apparatus as claimed in one of the preceding claims, **characterized in that** the apparatus is dimensioned for converting kinetic energy of flowing water into kinetic energy of a rotatable shaft.

11. Apparatus as claimed in one of the claims 1-9, **characterized in that** the apparatus is dimensioned for converting kinetic energy of a rotatable shaft into kinetic energy of vessel connected to the apparatus and that the rotatable shaft of the apparatus is connected to an internal combustion engine or to an electric motor.

12. Apparatus as claimed in one of the claims 1-9, **characterized in that** the apparatus is dimensioned for converting kinetic energy of wind into kinetic energy of a rotatable shaft and that the rotatable shaft is coupled to an electric generator.

13. Combination of apparatuses as claimed in one of the preceding claims, **characterized in that** the rotatable shafts of the apparatuses extend mutually parallel, and that the distance between the channel walls of adjacent apparatuses is smaller than the width of the channel walls.

14. Combination as claimed in claim 13, **characterized in that** the blades of the apparatuses in their position perpendicular to the flow direction, extend substantially in the same plane.

15. Combination as claimed in claim 13 or 14, **characterized in that** the apparatuses are all connected to the same energy converter.

**Patentansprüche**

1. Vorrichtung zum Austausch von kinetischer Energie zwischen einer Flüssigkeit und einer Struktur, die relativ zu der Flüssigkeit beweglich und mit der Vorrichtung verbunden ist, wobei die Vorrichtung umfasst:

   - einen Kanal (1), der von einer Kanalwand, die mit der Struktur verbunden ist eingeschlossen ist, wobei die Kanalwand angepasst ist, um die Flüssigkeit zu leiten;
   - mindestens vier im Wesentlichen identische Blätter, die sich in den Kanal erstrecken, die innerhalb des Kanals bewegbar sind, und die mit einem Energiewandler verbunden sind, der mit der Struktur gekoppelt ist, wobei jedes der Blätter zwei im Wesentlichen identische Blattteile umfasst, die durch ein Gelenk (10) getrennt sind, das sich in jeder Position der Blätter auf einer radialen Ebene erstreckt;

   wobei:

   - - die Blätter angepasst sind, um eine wiederholte Bewegung auszuführen,
   - - in Strömungsrichtung mit der Hauptebene der Blätter, die sich im Wesentlichen senkrecht zu der Strömungsrichtung erstreckt, und
   - - gegen die Strömungsrichtung mit der Hauptebene der Blätter, die sich im Wesentlichen parallel zu der Strömungsrichtung erstreckt,

   **dadurch gekennzeichnet, dass**

   - zwischen jedem Paar von benachbarten Blättern eine Wandverbindung mit der Kanalwand verbunden ist;
   - sich eine zweite orthogonale Gelenkverbindung in der Mitte von jedem Gelenk befindet;
   - sich eine Stange (8) zwischen jeder Wandverbindung und den zwei benachbarten Gelenkverbindungen erstreckt; und
   - sich die zwei Blatthälften, die an eine Wandverbindung angrenzen, orthogonal in jeder Position der Blätter erstrecken.

2. Vorrichtung nach Anspruch 1, **dadurch gekennzeichnet, dass** der Kanal in der Position der Blätter einen symmetrischen Querschnitt aufweist, wobei die Blätter symmetrisch in dem Kanal angeordnet sind, und die Wandverbindungen gleichmäßig über den Umfang des Querschnitts des Kanals verteilt sind.

3. Vorrichtung nach Anspruch 2, **dadurch gekennzeichnet, dass** die Blatthälften jeweils einen Rahmen mit geraden Stangen, die sich parallel zu den Achsen der Gelenke auf beide Seiten der Gelenke erstrecken, und eine halbkreisförmige Führungsschiene, die die distalen Enden der Stangen verbindet umfasst, wobei eine Manschette um jede halbkreisförmige Führungsschiene angeordnet ist, und wobei jede Manschette mit einer Stange verbunden ist.

4. Vorrichtung nach Anspruch 1, 2 oder 3, **dadurch gekennzeichnet, dass** die Blatthälften Blattscheiben umfassen, die an einer Seite der Blattrahmen angeordnet sind.

5. Vorrichtung nach Anspruch 4, **dadurch gekennzeichnet, dass** die Blatthälften Blattscheiben umfassen, die sich auf beide Seiten der Blattrahmen erstrecken.

6. Vorrichtung nach einem der vorhergehenden Ansprüche, **dadurch gekennzeichnet, dass** die Vorrichtung sechs Blätter umfasst, und dass sich die zwei Stangen, die sich von derselben Verbindung erstrecken, in einem Winkel von 120° erstrecken.

7. Vorrichtung nach Anspruch 6, **dadurch gekennzeichnet, dass** die Wandverbindung ein Kugelgelenk ist, und dass die zwei Stangen, die sich von dem Kugelgelenk erstrecken, fest verbunden sind.

8. Vorrichtung nach Anspruch 6, **dadurch gekennzeichnet, dass** die Wandverbindung eine Achse umfasst, die sich in tangentialer Richtung erstreckt, dass die zwei Stangen durch ein Kreuzgelenk mit der Achse verbunden sind, und dass die Achse mit dem Energiewandler verbunden ist.

9. Vorrichtung nach Anspruch 6, **dadurch gekennzeichnet, dass** die Vorrichtung eine Antriebsachse für jedes Blatt umfasst, wobei die Antriebsachse mit dem Energiewandler gekoppelt ist, und sich die Antriebsachse in einer tangentialen Richtung zwischen der radialen mittleren Ebene der Blätter erstreckt, und dass die Antriebsachse mit einer Kurbel verbunden ist, die mit der Mitte des Gelenks verbunden ist.

10. Vorrichtung nach einem der vorhergehenden Ansprüche, **dadurch gekennzeichnet, dass** die Vorrichtung dafür ausgelegt ist, die kinetische Energie von fließendem Wasser in kinetische Energie für eine drehbare Achse umzuwandeln.

11. Vorrichtung nach einem der Ansprüche 1 bis 9, **dadurch gekennzeichnet, dass** die Vorrichtung dafür ausgelegt ist, die kinetische Energie von einer drehbaren Achse in kinetische Energie für ein Gefäß umzuwandeln, das mit der Vorrichtung verbunden ist, und dass die drehbare Achse der Vorrichtung mit einem internen Verbrennungsmotor oder einem Elektromotor verbunden ist.

12. Vorrichtung nach einem der Ansprüche 1 bis 9, **dadurch gekennzeichnet, dass** die Vorrichtung dafür ausgelegt ist, die kinetische Energie von Wind in kinetische Energie für eine drehbare Achse umzuwandeln, und dass die drehbare Achse mit einem elektrischen Generator verbunden ist.

13. Kombination aus Vorrichtungen nach einem der vorhergehenden Ansprüche, **dadurch gekennzeichnet, dass** sich die drehbaren Achsen der Vorrichtungen parallel zu einander erstrecken, und dass der Abstand zwischen den Kanalwänden der benachbarten Vorrichtungen kleiner ist als die Breite der Kanalwände.

14. Kombination nach Anspruch 13, **dadurch gekennzeichnet, dass** die Blätter der Vorrichtungen sich in ihrer Position senkrecht zu der Strömungsrichtung im Wesentlichen auf derselben Ebene erstrecken.

15. Kombination nach Anspruch 13 oder 14, **dadurch gekennzeichnet, dass** die Vorrichtungen alle mit demselben Energiewandler verbunden sind.

**Revendications**

1. Appareil d'échange d'énergie cinétique entre un fluide et une structure mobile par rapport au fluide et reliée à l'appareil, l'appareil comprenant :

    un canal (1) enfermé par une paroi de canal reliée à la structure, la paroi de canal étant conçue pour guider le fluide ;

au moins quatre pales sensiblement identiques s'étendant à l'intérieur du canal, mobiles à l'intérieur du canal et reliées à un convertisseur d'énergie accouplé à la structure, les pales comprenant chacune deux parties de pale sensiblement identiques, séparées par une charnière (10), s'étendant dans un plan radial dans chaque position des pales ;

les pales étant conçues pour effectuer un mouvement récurrent,

dans la direction d'écoulement, le plan principal des pales s'étendant sensiblement perpendiculairement à la direction de l'écoulement, et

contre la direction d'écoulement, le plan principal des pales s'étendant sensiblement parallèlement à la direction d'écoulement,

**caractérisé en ce que**

entre chaque paire de pales adjacentes, un joint de paroi est relié à la paroi de canal ;

un second joint de charnière orthogonal est situé au centre de chaque charnière ;

une tige (8) s'étend entre chaque joint de paroi et les deux joints de charnière adjacents ; et

les deux moitiés de pale adjacentes à un joint de paroi s'étendent orthogonalement dans chaque position des pales.

2. Appareil selon la revendication 1, **caractérisé en ce que** le canal a une section transversale symétrique à l'emplacement des pales, les pales sont disposées symétriquement dans le canal et les joints de paroi sont répartis uniformément sur la circonférence de la section transversale du canal.

3. Appareil selon la revendication 2, **caractérisé en ce que** les moitiés de pale comprennent chacune un cadre avec des barres droites s'étendant des deux côtés des charnières parallèlement aux axes des charnières et un rail de guidage semi-circulaire reliant les extrémités distales des barres, un manchon étant placé autour de chaque rail de guidage semi-circulaire et chaque manchon étant relié à une tige.

4. Appareil selon la revendication 1, 2 ou 3, **caractérisé en ce que** les moitiés de pale comprennent des feuilles de pale situées d'un côté des cadres de pale.

5. Appareil selon la revendication 4, **caractérisé en ce que** les moitiés de pale comprennent des feuilles de pale s'étendant des deux côtés des cadres de pale.

6. Appareil selon l'une quelconque des revendications précédentes, **caractérisé en ce que** l'appareil comprend six pales et **en ce que** les deux tiges s'étendant à partir du même joint s'étendent sous un angle de 120°.

7. Appareil selon la revendication 6, **caractérisé en ce que** le joint de paroi est un joint à rotule et **en ce que** les deux tiges s'étendant à partir du joint à rotule sont reliées de manière solide.

8. Appareil selon la revendication 6, **caractérisé en ce que** le joint de paroi comprend un arbre s'étendant dans la direction tangentielle, **en ce que** les deux tiges sont reliées à l'arbre par un joint universel et **en ce que** l'arbre est relié au convertisseur d'énergie.

9. Appareil selon la revendication 6, **caractérisé en ce que** l'appareil comprend un arbre d'entraînement pour chaque pale, l'arbre d'entraînement étant accouplé au convertisseur d'énergie et l'arbre d'entraînement s'étendant en direction tangentielle entre le plan central radial des pales et **en ce que** l'arbre d'entraînement est relié à une manivelle reliée au centre de la charnière.

10. Appareil selon l'une des revendications précédentes, **caractérisé en ce que** l'appareil est dimensionné pour convertir l'énergie cinétique de l'eau courante en énergie cinétique d'un arbre rotatif.

11. Appareil selon l'une des revendications 1 à 9, **caractérisé en ce que** l'appareil est dimensionné pour convertir l'énergie cinétique d'un arbre rotatif en énergie cinétique d'un récipient relié à l'appareil et **en ce que** l'arbre rotatif de l'appareil est relié à un moteur à combustion interne ou à un moteur électrique.

12. Appareil selon l'une des revendications 1 à 9, **caractérisé en ce que** l'appareil est dimensionné pour convertir l'énergie cinétique du vent en énergie cinétique d'un arbre rotatif et **en ce que** l'arbre rotatif est accouplé à un générateur électrique.

13. Combinaison d'appareils selon l'une des revendications précédentes, **caractérisée en ce que** les arbres rotatifs des appareils s'étendent parallèlement l'un à l'autre, et **en ce que** la distance entre les parois de canal d'appareils adjacents est inférieure à la largeur des parois de canal.

**14.** Combinaison selon la revendication 13, **caractérisée en ce que** les pales des appareils, dans leur position perpendiculaire à la direction d'écoulement, s'étendent sensiblement dans le même plan.

**15.** Combinaison selon la revendication 13 ou 14, **caractérisée en ce que** les appareils sont tous reliés au même convertisseur d'énergie.

Fig. 1

*Fig. 2A*

EP 3 268 602 B1

Fig. 2B

EP 3 268 602 B1

*Fig. 3*

Fig. 4

Fig. 5

**REFERENCES CITED IN THE DESCRIPTION**

**Patent documents cited in the description**

- NL 1039946 A